# EUROPEAN PATENT SPECIFICATION

(11) **EP 1 671 928 B1**
(45) Date of publication and mention of the grant of the patent: **05.12.2007**
(21) Application number: 04029683.2
(22) Date of filing: 15.12.2004
(51) Int. Cl.: C01B 31/04, F27B 17/00, F27D 23/00, C04B 35/52, H05B 7/085

(54) **Durable graphite bodies and method for their production**
Dauerhafte Graphitkörper und Verfahren zu ihrer Herstellung
Corps graphitiques durables et procede pour les preparer

(43) Date of publication of application: 21.06.2006
(73) Proprietor: SGL Carbon AG, 65203 Wiesbaden (DE)
(72) Inventor: Daimer, Johann, 64546 Mörfelden-Walldorf (DE); Fischer, Ludger, 53343 Wachtberg (DE)

(56) References cited:
- US-A- 894 441
- US-A- 4 394 766
- US-A1- 2003 235 232

## Description

The present invention is related to graphite bodies, such as electrodes and furnace lining blocks, that are more durable in aggressive operational environments and a method for manufacturing such bodies.

Fully or partially graphitized products of large sizes such as electrodes for arc furnaces, aluminium electrolysis, or carbothermic silicon production as well as linings for blast furnaces are subject to various erosion processes in their harsh operational environments.

In Hall-Heroult cells for aluminium production, the cathode block material has a useful life of four to ten years, or even less under adverse conditions. The deterioration of the cathode blocks is a result of both, mechanical as well as chemical, erosion. Mechanical erosion is caused by the abrasive movement of sludge particles on the cathode block surface. Chemical erosion comprises penetration of electrolyte and liquid aluminium as well as intercalation of sodium, which causes swelling and deformation of the cathode blocks and ramming mixture.

However, the increased productivity of aluminium smelters owing to the applied higher power densities made possible by substituting carbon with graphite was somewhat set off by the higher wear rates of graphite cathode blocks.

Various methods have been proposed to provide cathode blocks with ingredients or coatings for wear reduction. Most of those methods are based on titanium boride and/ or other titanium compounds. Introduction of such foreign elements into the carbon material or onto the carbon block surface however creates additional porosity at the interface between carbon and the embedded compounds and the compounds themselves can act as catalysts for carbon consumption. The combination of added porosity and catalytic activity can thus enhance the wear rate of the carbon block once the hot electrolyte bath has paved its way through cracks in the coating.

Carbon refractory bricks are used for the lining of blast furnaces. They have excellent thermal conductivity and resistance to slag in comparison to fireclay bricks. However, their longevity has not reached satisfactory levels for certain applications. The causes of damage of carbon refractory linings within blast furnace include carburization dissolution into the molten iron, structural destruction accompanying the penetration of molten iron into the pores and temperature fluctuation, formation of cracks due to the penetration of and reaction with alkali and zinc vapors and formation of cracks due to thermal stress. Wear of carbon refractory bricks is further accelerated by various metal impurities incorporated within the carbon material.

One of the most important applications of graphite is as electrodes for arc melting of steel. During operation of electric arc steel furnaces, the graphite electrodes are subject to mechanical, chemical and electrical stresses of such severity, that particularly for ultra high powered furnaces, only graphite of very high quality can be used. The electrodes are subject to the mechanical stresses from falling scrap being melted, from the inductance caused by the high AC current and also subject to oxidation due to the temperature reached, which will range from relatively low temperatures at the upper electrode parts to the graphite sublimation temperature above 3000° C at the submerged electrode tip.

Although graphite is one of the most inert and least reactive materials known, oxidation is a highly significant cause of deterioration of strength and loss of material at these extremely high temperatures encountered in an electric arc furnace. Significant oxidation can occur in the upper part of the electrodes that are exposed to air before being submerged into the hot metal melt.

Thus, retardation of the oxidation reactions is highly beneficial in reducing electrode consumption, both by reduction of direct oxidation and by lessening breakage caused by oxidation-induced loss of electrode strength. Hence, oxidation retardant solutions as described DE 41 36 823 and in US 6,645,629 have been used by graphite manufacturers to treat graphite electrodes for many years. However, these have been unsuccessful in the past due to a variety of shortcomings of such treatments including poor oxidation retardation on the electrodes, increased corrosion of the electrode holder, and arcing between the electrode and the electrode holder caused by the presence of a non-conductive film between the electrode and its holder.

Another approach to decrease graphite electrode oxidation is to apply a coating consisting essentially of metals or metal alloys. Such coatings have been described in DE 41 36 823 and US 4,824,733. Difficulties arise not only from the added costs especially of the multiple coatings proposed in more recent patent applications but also from several technical drawbacks, such as cracking of the coating and adhesion issues at the contact clamps holding the electrodes.

Another important application of carbon or graphite electrodes is the process for the carbothermic reduction of silicon dioxide to silicon metal. The process employs a substantially closed, direct current, submerged-arc furnace. The overall reduction reaction can be represented as SiO₂ + 2C = Si + 2CO. In this process, amorphous carbon is continuously fed to the furnace while the carbon-based electrodes are only slowly consumed and are exposed to an oxygen-rich furnace atmosphere over a long time period. With increasing production efficiency demand for such furnaces, including the electrode lifetime, became an issue. Therefore, partially graphitized electrodes for carbothermic reduction of silicon dioxide having lower metal impurity content, especially of iron, for higher oxidation resistance are in increasing demand.

The electrode bodies, before graphitization, are formed of amorphous carbon, e.g. coke and binder pitch, and have been previously baked (carbonized) at 700° C to 1100° C in accordance with conventional practices. This step is commonly followed by pitch impregnation with a further baking step. That densification procedure can be repeated several times. The final heat treatment step, the graphitization, is carried out according to two different main process techniques.

The Acheson graphitization process was originally described in US patent 702,758. The furnace consists of a horizontal bed of refractory materials, furnace heads carrying the current load to the furnace, and long sidewalls made of concrete blocks, steel sheets, or steel grids. The bottom is cooled by air and loaded with a layer of insulating materials, e.g. granular silicon carbide, metallurgical coke, sand, or sawdust. The same materials are used for insulating the sidewalls and the surface of the furnace. Carbon black is used as an insulating material, especially if a lower ash content of the graphite product is desired (thermal purification). Carbon bodies that are to be graphitized are stacked between the furnace heads, usually horizontally and transversely to the flow of the electric current. The bodies are separated from each other and surrounded by a granular resistor medium, e.g. coke mixtures.

Acheson furnaces are firm constructions well-suited for the graphitization of all possible shapes and grades. Less satisfying are their long heating and cooling times amounting to about 2 to 6 weeks production time for one graphitization run, the respective high energy demand, the relatively small production rate per square meter, the inhomogeneity of the product, and the difficulty of emission control.

Production technology for large-dimensioned graphite bodies thus evolved from the Acheson furnace to the Castner or lengthwise graphitization (LWG) process with direct current. The term "large-dimensioned" generally refers to graphite bodies having dimensions above 200 x 200 x 200 mm or 200 mm diameter x 200 mm length, respectively.

The original apparatus for carrying out the LWG process is the subject of U.S. patent 1,029,121. Nowadays it is common to graphitize cathode blocks for aluminium electrolysis or carbon linings for blast furnaces with the LWG process. Compared to the older Acheson technology this leads to a much higher consistency in the critical properties of the finished block. In particular, the electric resistivity from block to block, and also within each block from end to end is distributed more closely.

In the LWG process, carbon electrode bodies are placed in end-to-end contact to form an electrically conductive column which is supported on, and also covered by, a heat insulating pack medium, e.g. coke granules, in a furnace which provides an electrical connection at each end of the column. Electrical current flows through the column of carbon bodies and heats the carbon bodies to graphitization temperature, e.g. 2500° C to 3500° C by the Joule effect. In the course of the LWG process, the amorphous carbon electrode bodies are converted to graphite at high temperatures, up to 3500° C, using very large electrical currents, typically direct current (DC) in the range of more than 100.000 A. Much higher heating rates are possible, and heat losses are accordingly smaller. In a common practice of the LWG process, the time period for heating the carbon electrode to graphitization temperature (2500° C - 3500° C) is typically 2-8 hours, after which electrical current is discontinued and cooling of the now graphitized electrode to a safe handling temperature, e.g. 900° C - 1100° C, proceeds.

Even after graphitization at around 3000 °C, most bulk commercial graphite products contain small amounts of metallic impurities. This issue is especially true for graphite products originating from LWG furnace because of the short time the carbon body is exposed to temperatures above 2000 °C that is required to volatilise various metallic impurities.

These impurities originate in the raw material calcined cokes, recycled graphites, and coal tar and petroleum pitches. The total impurities may be up to 2000 ppm as measured by combustion ash. The ash level will be higher if inorganic compounds were purposely added at the mixing stage to control so-called puffing. In the carbon-rich environment many of the metal species are likely present as carbides, many of which are extremely stable. Some metals can be present in the final graphite as µm-sized pools of complex alloys.

It has long been known that oxidation of carbon and graphite is enhanced in the presence of inorganic species. Elements such as Na, V, Fe, and Cu can act as active oxidation catalysts. It would therefore be beneficial for oxidation retardation for graphite electrodes to provide graphite material with very low levels of impurities, especially of elements acting as oxidation catalysts.

The need for highly pure graphite as a moderator for thermal neutrons in water- and gas-cooled nuclear fission reactors has caused development of various purification methods mainly in the 1940s and 1950s.

At that time, purification processes involving halogen gas purges either during Acheson graphitization, or as a subsequent step, developed for the production of spectroscopic-grade electrodes for chemical analysis, were enhanced to cope with monolithic nuclear blocks. Chlorine is an effective agent except for boron. Boron removal to below 1 ppm can be improved by fluorine which is generated in-situ by the reduction of either carbon tetrafluoride, or chlorofluorocarbons. The reaction between graphite and a stream of neat fluorine is too virulent. Generally speaking, chemical graphite purification is based on formation of volatile metal halides during graphitization.

In US 2,734,800, a purification method is described that involves the combination of treatment with chlorine and gaseous fully chlorinated hydrocarbons, followed by treatment with a gaseous fluorinating agent in an Acheson furnace at elevated temperature.

DE 10 67 416 describes a purification method based on an Acheson furnace where cardboard or wooden panels are inserted into the packing media to prevent contamination of the generated graphite block by vapours originating from the packing media and where NaF is inserted into the packing media in order to generate fluorine gas during graphitization. However, the fluorine is released when the packing medium temperature around the NaF reaches 1700 °C by what time the to be purified carbon body has reached a maximum temperature of 1500 °C which is to low to provide efficient formation of volatile metal halides. Further, Na impurities are introduced and can be detected in the products. -

Although the demand for the purification of monolithic graphite moderator blocks has waned, the 1990's saw a rising need both quantitatively, and qualitatively, from the semiconductor sector. A current typical limit of 10 ppm ash is met with high temperature chlorine flushes of small-dimensioned graphite parts in Acheson furnaces.

The currently available technology for chemical purification of graphite during graphitization is exclusively based on the Acheson process and thus mainly on graphite products having relatively small dimensions because the larger graphite products are nowadays overwhelmingly being graphitized in LWG furnaces due to the better temperature profile and productivity issues. Due to the short time of exposure to temperatures well above 2000 °C required to volatilise various metallic impurities. This disadvantage it even more true when a partial graphitization process is applied. This involves an even shorter heat treatment of carbon bodies that do not require to be fully graphitized, for example electrodes for carbothermic reduction of silicon.

US patent 4394766 discloses a method for forming graphite bodies by graphitizing amorphous carbon bodies by the joule effect in a lengthwise graphitization furnace in presence of a bed of particulate insulating medium.

However, due to the short graphitization cycle times at the LWG process, it has so far not been successful to establish a process for chemical purification during LWG. This is further hampered by the challenge to purify large dimensioned carbon bodies that are typically subject to LWG as compared to carbon bodies of small to medium dimensions that are typically subject to Acheson graphitization. Therefore, many large dimensioned fully or partially graphitized products originating from the LWG process have high levels of impurities. Nevertheless, ongoing technological advances and productivity enhancements require increasingly large dimensioned fully or partially graphitized products with very low impurity levels.

The preferred result in the spirit of this invention is that as many metal impurities as possible have formed volatile halides with the halogen diffusing through the carbon body during graphitization. Although metal impurities can appear in a wide range of salts or other compounds of various elements in the electrode, in particular iron is most commonly in the focus of purification efforts. This peculiar fact is related to the common practise to add iron salts to the petroleum coke in order to prevent so-called puffing during heat treatment. Typically, iron (III) oxide is added at 1 to 2 by weight % to the green mix as a puffing inhibitor.

Puffing is the term used to describe rapid liberation of gases based in both, nitrogen or sulphur, always contained to certain amounts in petroleum or pitch coke. Upon rapid graphitization the puffing effect is even more pronounced, thus causing often difficult to detect cracks in the graphite body that can result in catastrophic product failure during operation.

Hence, the iron addition is more required for the LWG process, having a more rapid heating regime than for the Acheson process, on the other hand the LWG so far could not be coupled with a sufficient purification process due to the rapid heating cycle. This specific contradiction points out the importance of this invention.

The present invention aims to solve the above described issues.

It is therefore an object of this invention to provide large dimensioned fully or partially graphitized products with ash contents below 200 ppm and in particular an iron content below 25 ppm.

It is another object of this invention to provide a method to purify such products during the LWG process by placing graphite intercalation compounds (GIC) based on halogen into the furnace below the carbon bodies.

It is yet another object of this invention to place graphite foil in an LWG furnace around the to be graphitized carbon bodies to support the purification process.

It is a further object of this invention to place graphite intercalation compounds (GIC) based on halogen below to the to be graphitized carbon bodies in an LWG furnace and wrap graphite foil around the carbon bodies to support the purification process.

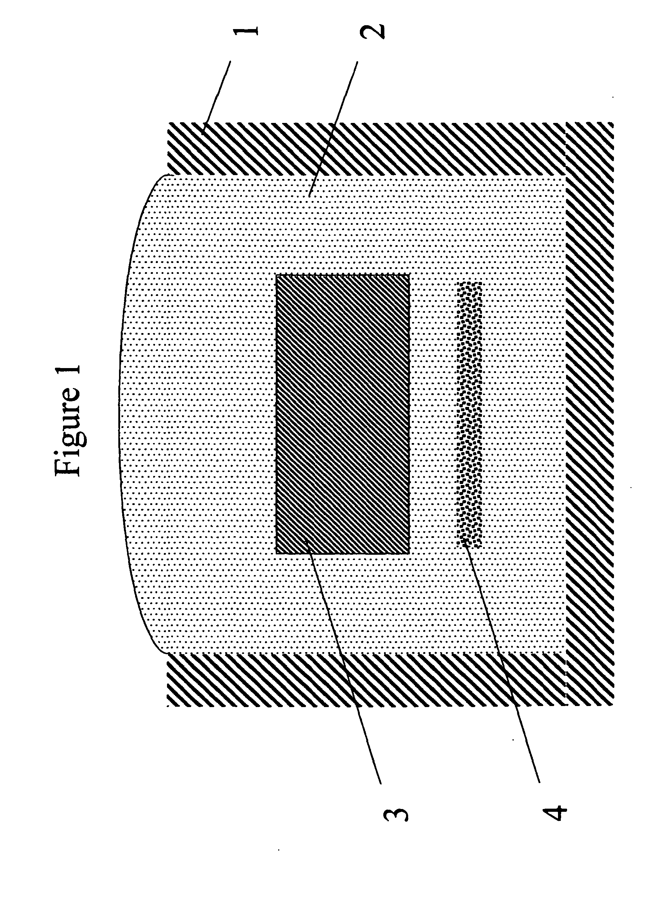

The advantages and features of the present invention will be further described in more detail by following description with reference to the accompanying drawings where
Figure 1 shows a cross-cut through a lengthwise graphitization (LWG) furnace 1, being filled with packing media 2 consisting of metallurgical coke completely enclosing the to be graphitized carbon body 3 and containing a layer 4 of halogen-based graphite intercalation compound (GIC) located below carbon body 3.

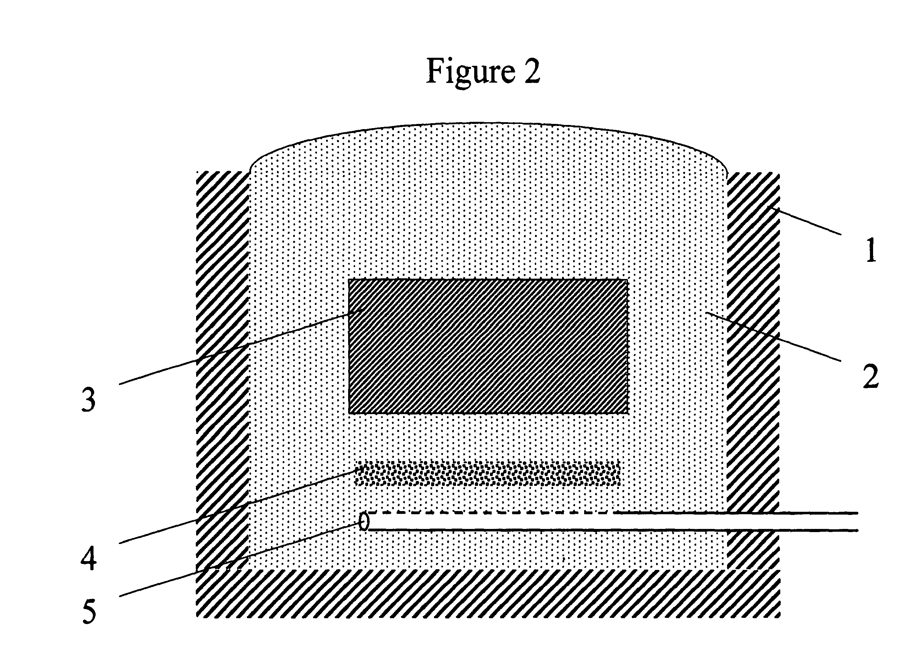

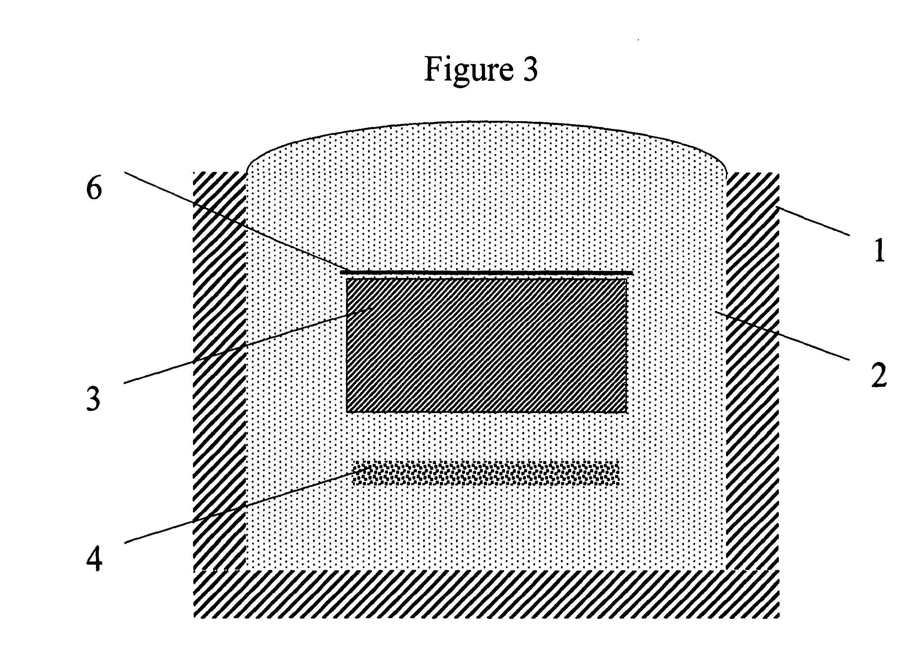

In Figure 2, the same furnace arrangement is shown but with the addition of a graphite tube 5 extending horizontally through the furnace wall below the GIC layer 4. The same furnace arrangement as in Fig. 1 is shown in Figure 3, but with the addition of a layer of graphite foil 6 in close proximity above the carbon body 3.

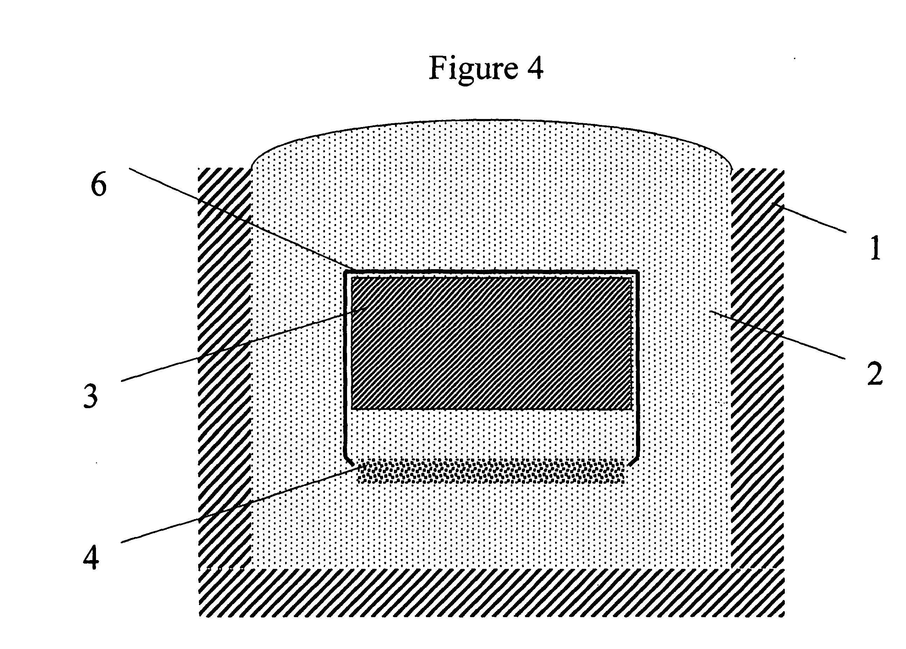

Figure 4 depicts the same furnace arrangement as in Fig. 3 but the graphite foil 6 in is almost completely wrapped around the carbon body 3.

The most widely used graphite intercalation compound (GIC) is a fluorinated carbonaceous material commonly referred to as Graphite fluoride ({CFx}ₙ, where 1.0 ≥ x ≥ 0.5). This substance is somewhat distinguishable from graphite intercalated with low amounts of fluorine since it comprises the lamellar structure of carbon atoms in a graphite lattice with atoms of fluorine interposed between the graphitic planes. The fluorine is not easily removed from the graphite fluoride by simple heating to temperatures at which the intercalated product would freely release its intercalate. Typically, the intercalated product will freely release most of the fluorine intercalate at temperatures in the range of 350 °C to 400 °C. The interlamellar spacing for graphite fluoride, which is thought to be a mixture of two different compounds having interlamellar spacings of 5.9 and 8.8 A, falls in a range between those values and depends upon the reaction temperature. This variability suggests that the ratio of the two compounds, thought to be {CF}ₙ, known to have an interlamellar spacing of approximately 5.9 A, and {C₂F}ₙ, known to have an interlamellar spacing of approximately 8.8 A, depends upon the reaction temperature. The fluorine atoms in graphite fluoride are covalently bonded to the carbon atoms, not just residing in the interstitial spaces as is true in "simple" fluorine-intercalated graphite. The latter product has a higher conductivity than does the pristine graphite from which it is made. In contrast, graphite fluoride has a conductivity that is orders of magnitude lower than that of the pristine graphite from which it is made.

Graphite fluoride can be considered to be inert at temperatures lower than 400 °C Above 400 °C, however, defluorination occurs. Significant numbers of carbon atoms are carried off with the fluorine atoms. Under certain conditions this exothermic reaction might be considered explosive because the thermal energy released raises the temperature of the mass of CFₓ and accelerates the reaction. The amount of energy released is testament to the fact that chemical bonds are being broken, indicating that graphite fluoride is not exactly the same as fluorine-intercalated graphite. In theory, at least, if the heat from the reaction can be dissipated quickly enough, the rate of defluorination can be controlled.

Recent studies have demonstrated that graphite fluoride fibers having diameters in the 10-15 µm range can release fluorine slowly at temperatures in the range of 300 ° C to 500 °C in a nitrogen or air atmosphere. In a bromine atmosphere, such defluorination can take place at temperatures above 350 °C. This finding has been utilized in US patent 6,036,934 to produce high-performance carbon or graphite fibers. Graphite fluoride is more commonly being used as solid lubricant or as cathode material for lithium batteries. It is commercially available from various sources and can be synthesized from various carbonaqueous or graphitic raw materials such as petroleum coke, carbon fibers, natural or synthetic graphite powder, and expanded graphite. Various synthesis methods and some properties of graphite fluoride have been summarized by S. Koyama in Z. anorg. allg. Chem. 540/541 (1986) 117- 134. Other halogens, namely bromine and chlorine or mixed compounds thereof can also be used for the synthesis of respective graphite intercalation compounds, as described for example by G. Hennig in J. Chem. Physics, 20 (1952) No. 9, 1143 ff..

Manufacturing of carbon and/ or graphite products has been practised over more than a century and thus many manufacturing process variation exist. The general principles are briefly explained below.

In the first step, the so-called green mixture used to produce carbon or graphite bodies is made from pitch or petroleum coke optionally mixed with commonly used additives such as carbon black or carbon fibers. Further, binder pitch is added to this blend. To achieve the required homogeneity, the pitch and the other components are preferably mixed in an intense mixer at elevated temperatures, typically at around 150 °C. This so-called green mixture is then cooled down to around 100 °C and the green body is formed by extrusion, presses or vibrating molds.

These so-called green blocks are placed in a common ring furnace, covered by metallurgical coke and heated for less than 12 hours to 1100 °C. They remain at that maximum temperature for less than an hour.

Some of the metal impurities evaporate from the carbon body during carbonization up to 1100 °C, but those temperatures are too low to facilitate formation of volatile metal halogen compounds from the remaining non-volatile metal impurities.

The most remarked purification effect can be achieved by artificial formation of volatile metal halogen compounds during the grapitization treatment where temperatures reach 2500 °C and above. Within a given time frame during graphitization, halogen gases need to diffuse through the carbon body, have to react with the various metal impurities to form volatile metal compounds. The major difficulty in industrial purification practise is that the metal impurities are trapped within the relatively large dimensioned carbon bodies and their diffusion to the surface is slow. Thus, providing an efficient source of halogen, especially of fluorine, in close proximity to the carbon bodies is a pre-requisite for an effective purification process.

According to this invention, halogen-based GIC are the halogen source of choice. They can be placed below the to be graphitized carbon bodies within the metallurgical coke used as insulation media. Since they only contain the halogen and graphite, no other metal impurities from salt anions are involved. In the LWG process, the carbon bodies are heated directly and subsequently heat up the surrounding insulating packing media. Thus, the halogen is liberated from the GIC host material when the latter reaches temperatures of 350 °C by being exposed to the heat being radiated by the at that time at least 2000 °C hot carbon bodies. The 2000 °C is the required temperature threshold to facilitate formation of volatile metal halides. Therefore, in contrast to the Acheson graphitization process, the halogen is liberated not before the carbon bodies reach the 2000 °C threshold.

During the LWG process according to this invention, the at above 350 °C released halogen reaches the more than 2000 °C hot carbon bodies, diffuses through them and forms volatile metal halides that evaporate.

This arrangement is shown in Fig.1, where a lengthwise graphitization (LWG) furnace 1 is filled with packing media 2 consisting of metallurgical coke, the to be graphitized carbon body 3 being essentially positioned in the centre of the furnace volume and the layer 4 of halogen-based graphite intercalation compound (GIC) is located below carbon body 3.

The required amount of GIC depends on the nature of the carbon or graphite host material as well as on the concentration of the respective halogen in the GIC. The higher the halide concentration the lower the GIC amount required to be added to the coke. Furthermore, the dimensions of the furnace as well as the to be graphitized carbon bodies and the required purification level are important parameters. Generally, 10 to 50 kg of halogen-based GIC are required for one graphitization run.

The GIC may be based on halogen intercalated petroleum coke, natural or synthetic graphite powder, anthracite, pitch or PAN-based carbon fibers or other commonly known carbon materials. It was, however, found, that graphite fluoride based on synthetic graphite powder yields the best results.

Further, the distance of the GIC layer placed below the carbon bodies depends largely on the LWG furnace construction and heating rate. The higher the heating rate, the closer to the carbon bodies the GIC has to be placed. Placing the GIC layer between 5 to 35 cm below the carbon bodies yielded the best results.

The purification process may further be supported by subjecting the graphitizing bodies to chlorine gas when the temperature measured at the body surface reaches 2000 °C. Figure 2 shows a furnace arrangement according to this invention with a graphite tube 5 extending horizontally through the furnace wall below the GIC layer 4. The chlorine gas is purged through holes of the tubes extending horizontally through the walls of the LWG furnace. Those graphite tubes 5 are preferably alternatingly extend through the left and right furnace walls.

Furthermore, NaF or other suitable fluorides can be mixed with the GIC and placed below the column of graphitizing bodies to make the purification even more effective. The amount of NaF to be added to the GIC should be limited to 20% by weight with respect to the GIC.

In another embodiment of this invention, one or more layers of graphite foil are placed above the column of the to be graphitized carbon bodies in a LWG furnace, as shown in Figure 3, where a layer of graphite foil 6 in close proximity above the carbon body 3 is depicted.

Graphite foil is commercially available under the trademark ^{®}SIGRAFLEX. It is made of expanded natural graphite particles that are being compressed to a foil by calandering. This material is mainly used for gaskets because it combines resilience and imperviousness. The latter property can be utilized according to this invention.

During the short time frame of purification in a LWG furnace, various volatiles are liberated that have to be collected and condensed by a filter system adjacent to a fume hood covering the furnace. This task can be substantially eased by placing graphite foil above the source of the volatiles, namely the carbon bodies, to absorb parts of the passing fumes. The graphite foils can be used for several graphitization runs. Further, if chlorine gas is purged through the furnace to support purification, the graphite foil partially acts as barrier and can deflect the gas thus improving purification efficiency.

According to another embodiment of this invention, halide-based GIC is placed below the carbon bodies as described above and the graphite foil is almost completely wrapped around the to be carbon bodies stretching from one side edge of the GIC layer to the other. Figure 4 illustrates this furnace arrangement where the graphite foil 6 in is almost completely wrapped around the carbon body 3. Although not shown, this furnace arrangement can also include graphite tubes 5 for purging chlorine gas.

Preferably, the graphite foil is not placed directly on top of the carbon bodies but a thin layer of up to 2 cm of metallurgical coke, commonly used as insulating material in graphitization furnaces, is poured over the carbon body before placing the foil. Afterwards, the complete furnace is filled with metallurgical coke.

Although having a less remarked effect, the above described utilization of graphite foil is also advantageous during halogen-supported purification in Acheson furnaces.

Further it was found that adding 10 to 50 % by weight synthetic graphite powder to the green mix supports purification efforts in LWG and also Acheson furnaces because the synthetic graphite has a lower impurity level than coke or other carbon raw materials and hence "depletes" the more impure carbon ingredients.

The process of this invention can likewise be applied to the partial LWG process, where the carbon bodies are subjected to maximum temperatures of 2200 °C. In this case, the GIC needs to be placed somewhat closer to the carbon bodies and other process parameters may have to be adjusted. Partial graphitization is for example used to manufacture modern electrodes for the carbothermic reduction of silicon dioxide to silicon metal.

The present invention will be further described by following examples:

### Example 1

Graphitized cathode blocks were produced according to the following procedure: 100 parts petrol coke with a grain size from 12 µm to 7 mm were mixed with 25 parts pitch at 150 °C in an intense mixer for 10 minutes. The resulting mass was extruded to blocks of the dimensions 700 x 500 x 3400 mm (width x height x length). These so-called green blocks were placed in a ring furnace, covered by metallurgical coke and heated to 1100 °C for 10 hours. The resulting carbonised blocks were then placed in a LWG furnace having its floor covered by metallurgical coke and having a layer of 25 kg of commercially available graphite fluoride with a grain size from 50 µm to 0,5 mm positioned at a distance of 20 cm below the bottom surface of the carbon bodies. The column of blocks arranged in the furnace was covered by a thin 2 cm layer of metallurgical coke and then a 1 m wide roll of ^{®} SIGRAFLEX graphite foil stretching over the entire length of the furnace. The remaining furnace volume was filled with metallurgical coke. Purification during graphitization was supported by chlorine gas when the temperature measured at the body surface reached 2000 °C. The chlorine gas was purged for 1 hour at a rate of 5l/h through small holes of a 5 cm diameter graphite tube situated below the column of graphitizing bodies stretching along the length of the LWG furnace. Afterwards, the furnace was again submitted to an inert gas atmosphere. The LWG furnace was covered by a fume hood connected to a suction system to filter and analyze all fumes evaporated during graphitization which was performed by heating the furnace to 2800 °C (temperature at carbon body surface) within 4 hours and then switching off the current.

### Example 2

Graphitized cathode blocks were produced in the same manner as in example 1 but without chlorine purification support.

### Example 3

Graphite furnace lining blocks were produced according to the following procedure: 100 parts calcined anthracite with a grain size from 12 µm to 4 mm were mixed with 25 parts pitch at 150 °C in a Sigma-blade mixer for 2 hours. The resulting mass was compacted by vibration molding to blocks of the dimensions 700 x 500 x 2500mm (width x height x length). These so-called green blocks were placed in a ring furnace, covered by metallurgical coke and heated to 1300 °C for 12 hours.

The resulting carbonised blocks were then placed in a LWG furnace having its floor covered by metallurgical coke and having a layer of 25 kg of commercially available graphite fluoride with a grain size from 50 µm to 0,5 mm positioned at a distance of 20 cm below the bottom surface of the carbon bodies. The column of blocks arranged in the furnace was covered by a thin 2 cm layer of metallurgical coke and then a 1 m wide roll of ^{®}SIGRAFLEX graphite foil stretching over the entire length of the furnace. The remaining furnace volume was filled with metallurgical coke. The LWG furnace was covered by a fume hood connected to a suction system to filter and analyze all fumes evaporated during graphitization which was performed by heating the furnace to 3000 °C (temperature at carbon body surface) within 4 hours and then switching off the current.

### Comparative Example 1

Graphitized cathode blocks were produced in the same manner as in examples 1 and 2 without addition of GIC and without other purification supporting measures as chlorine gas purging and without graphite foil.

### Comparative Example 2

Graphite furnace lining blocks were produced in the same manner as in example 3 without addition of GIC and without graphite foil.

The properties of the cathode blocks of furnace lining blocks of above examples were analysed in particular with respect to their ash content and especially their iron residues and are summarized in Table 1:

**Table 1**

| | Example 1 | Example 2 | Comparative example 1 | Example 3 | Comparative example 2 |
|---|---|---|---|---|---|
| Ash (ppm) | 11 | 23 | 2060 | 34 | 1590 |
| Fe (ppm) | 1 | 6 | 112 | 5 | 187 |

As can be seen from Table 1, the purification measures applied according to this invention yielded graphite bodies having an ash content well below 100 ppm and only less than 10 ppm remaining iron impurities. In contrast, the state of the art products of the comparative examples 1 and 2 have significantly higher impurity levels. Additional utilization of chlorine gas, as in example 1, yielded even purer products.

All products manufactured according to this invention had the same physical properties as those manufactured according to the state of the art. The products of this invention were tested with respect to their life time under accelerated lifetime testing conditions as well as in industrial practise. Depending on operational or test conditions, their life time was at least 50% higher than of state of the art products.

The present invention provides large-dimensioned graphite products produced by LWG having purity levels so far, if at all, reached by Acheson graphitization typically applied to carbon products of small dimensions. The method of this invention does not require substantial changes in common operational procedures or high investments in new equipment.

### Key to figures:

(1) lengthwise graphitization (LWG) furnace
(2) packing media (metallurgical coke)
(3) carbon body
(4) GIC layer
(5) graphite tube for purging chlorine
(6) graphite foil

## Claims

1. Process to manufacture a graphite body by forming a green body, carbonizing said green body, optionally followed by one or more densification steps, and finally subjecting the resulting carbon body to a graphitization procedure in a lengthwise graphitization (LWG) furnace containing halogen-based graphite intercalation compound (GIC).

2. Process according to claim 1 further comprising placing the halogen-based GIC layer between 5 to 35 cm below the carbon bodies.

3. Process according to claims 1 and 2 further comprising using 10 to 50 kg halogen-based GIC per graphitization run.

4. Process according to claims 1 to 3 further comprising using GIC based on halogen-intercalated petroleum coke, natural or synthetic graphite powder, anthracite, pitch or PAN-based carbon fibers or other commonly known carbon materials.

5. Process according to claims 1 to 4 further comprising using graphite fluoride based on synthetic graphite powder.

6. Process according to one of claims 1 to 5 further comprising adding less than 20% by weight NaF with respect to the GIC.

7. Process according to one of the claims 1 to 6 further comprising subjecting the carbon body to chlorine when the temperature measured at the body surface reaches 2000 °C.

8. Process according to one of the claims 1 to 7 further comprising covering the carbon body with graphite foil at distance of 1 to 2 cm above the carbon body, the space between foil and body being filled by packing media.

9. Process according to claim 8 further comprising almost completely wrapping the carbon body with graphite foil stretching from one side edge of GIC layer to the other, the space between foil and body being filled by packing media.

10. Graphite body obtainable by a process according to claim 1 having the dimensions above 200 x 200 x 200 mm or 200 mm diameter x 200 mm length and having an ash content below 200 ppm.

11. Graphite body according to claim 10 having an iron content below 25 ppm.

12. Graphite body according to claims 10 and 11 containing 10 to 50 % by weight secondary graphite powder.

13. Utilization of the graphite body according to one of the claims 10 to 12 as electrode for electric arc furnaces, cathode for aluminium electrolysis, lining block for blast furnaces, or electrode for carbothermic reduction processes.

## Patentansprüche

1. Verfahren zur Herstellung eines Graphitkörpers mittels Formen eines Grünkörpers, Karbonisierung dieses Grünkörpers, optional gefolgt von einem oder mehreren Verdichtungsschritten, und abschließend einem Graphitierungsschritt des entstandenen Kohlenstoffkörpers in einem Längsgraphitierungsofen (LWG) welcher eine halogenhaltige Graphitinterkalationsverbindung (GIC) enthält.

2. Verfahren gemäß Anspruch 1 **dadurch gekennzeichnet, dass** die halogenhaltige Graphitinterkalationsverbindung zwischen 5 cm bis 35 cm unter dem Kohlenstoffkörper geschichtet ist.

3. Verfahren gemäß Ansprüchen 1 und 2 **dadurch gekennzeichnet, dass** zwischen 10 kg bis 50 kg der halogenhaltigen Graphitinterkalationsverbindung je Graphitierungslauf eingesetzt wird.

4. Verfahren gemäß Ansprüchen 1 bis 3 **dadurch gekennzeichnet, dass** eine Graphitinterkalationsverbindung verwendet wird, die aus halogeninterkaliertem Petrolkoks, Naturgraphitpulver oder synthetischem Graphitpulver, Anthrazit, Carbonfasern auf Basis von Pech oder PAN, oder aus anderen halogeninterkalierten bekannten Kohlenstoffmaterialien besteht.

5. Verfahren gemäß Ansprüchen 1 bis 4 **dadurch gekennzeichnet, dass** Graphitfluorid auf Basis von synthetischem Graphitpulver verwendet wird.

6. Verfahren gemäß einem der Ansprüche 1 bis 5 **dadurch gekennzeichnet, dass** weniger als 20 Gew.% NaF bezogen auf die Graphitinterkalationsverbindung verwendet wird.

7. Verfahren gemäß einem der Ansprüche 1 bis 6 **dadurch gekennzeichnet, dass** der Kohlenstoffkörper bei einer, an seiner Oberfläche gemessenen, Temperatur von 2000 °C Chlor ausgesetzt wird.

8. Verfahren gemäß einem der Ansprüche 1 bis 7 **dadurch gekennzeichnet, dass** der Kohlenstoffkörper mit einem Abstand von 1 bis 2 cm mit Graphitfolie bedeckt wird und der Zwischenraum zwischen Folie und Körper mit Packmasse ausgefüllt wird.

9. Verfahren gemäß Anspruch 8 **dadurch gekennzeichnet, dass** der Kohlenstoffkörper fast vollständig mit Graphitfolie überspannt wird, wobei die Folie sich von einer Seite der aus Graphitinterkalationsverbindung gebildeten Schicht bis zur anderen Seite erstreckt und der Zwischenraum zwischen Folie und Körper mit Packmasse ausgefüllt wird.

10. Graphitkörper erhältlich nach dem Verfahren gemäß Anspruch 1 **dadurch gekennzeichnet, dass** er Mindestabmaße von 200 x 200 x 200 mm oder 200 mm Durchmesser x 200 mm Länge sowie einen Aschegehalt von unter 200 ppm aufweist.

11. Graphitkörper gemäß Anspruch 10 **dadurch gekennzeichnet, dass** er einen Eisengehalt von unter 25 ppm aufweist.

12. Graphitkörper gemäß Ansprüchen 10 und 11 **dadurch gekennzeichnet, dass** er einen Anteil von 10 bis 50% an sekundärem Graphitpulver aufweist.

13. Verwendung des Graphitkörpers gemäß einem der Ansprüche 10 bis 12 als Elektrode in Lichtbogenöfen, als Kathode in der Aluminiumelektrolyse, Auskleidungssteine für Hochöfen oder Elektrode in carbothermischen Reduktionsprozessen.

## Revendications

1. Procédé de fabrication d'un corps graphique par formation d'un corps cru, carbonisation de ce corps cru, suivie optionnellement d'une ou de plusieurs étapes de densification et, finalement, soumission du corps en carbone obtenu à une procédure de graphitisation dans un four de graphitisation longitudinale contenant un composé d'intercalation de graphite à base d'halogène.

2. Procédé selon la revendication 1, comprenant en outre l'étape consistant à placer la couche de composé d'intercalation de graphite à base d'halogène 5 à 35 cm en dessous des corps en carbone.

3. Procédé selon les revendications 1 et 2, comprenant en outre l'étape consistant à utiliser de 10 à 50 kg de composé d'intercalation de graphite à base d'halogène par cycle de graphitisation.

4. Procédé selon les revendications 1 à 3, comprenant en outre l'étape consistant à utiliser un composé d'intercalation de graphite basée sur du coke de pétrole à intercalation d'halogène, de la poudre de graphite naturel ou synthétique, de l'anthracite, de la poix ou des fibres de carbone à base de polyacrylnitrile ou d'autres matériaux en carbone communément connus.

5. Procédé selon les revendications 1 à 4, comprenant en outre l'étape consistant à utiliser du fluorure de graphite basé sur de la poudre de graphite synthétique.

6. Procédé selon l'une des revendications 1 à 5, comprenant en outre l'étape consistant à ajouter moins de 20 % en poids de NaF par rapport au composé d'intercalation de graphite.

7. Procédé selon l'une des revendications 1 à 6, comprenant en outre l'étape consistant à soumettre le corps en carbone à du chlore lorsque la température mesurée à la surface de ce corps atteint 2 000 °C.

8. Procédé selon l'une des revendications 1 à 7, comprenant en outre l'étape consistant à recouvrir le corps en carbone d'une feuille de graphite à une distance de 1 à 2 cm au-dessus du corps en carbone, l'espace entre la feuille et le corps étant rempli de moyens de rembourrage.

9. Procédé selon la revendication 8, comprenant en outre l'étape consistant à envelopper presque complètement le corps en carbone d'une feuille de graphite s'étirant d'un bord latéral de la couche de composé d'intercalation de graphite à l'autre, l'espace entre la feuille et le corps étant rempli de moyens de rembourrage.

10. Corps en graphite obtenu par un procédé selon la revendication 1, ayant les dimensions supérieures à 200 x 200 x 200 mm ou 200 mm de diamètre x 200 mm de longueur et ayant une teneur en cendres inférieure à 200 ppm.

11. Corps en graphite selon la revendication 10, ayant une teneur en fer inférieure à 25 ppm.

12. Corps en graphite selon les revendications 10 et 11, contenant de 10 à 50 % en poids de poudre de graphite secondaire.

13. Utilisation du corps en graphite selon l'une des revendications 10 à 12, comme électrode pour fours à arc électrique, cathode pour électrolyse d'aluminium, bloc de revêtement pour hauts fourneaux, ou électrode pour procédés de réduction carbothermique.
